(19)

Europäisches Patentamt

European Patent Office

Office européen des brevets

(11)  **EP 3 985 894 B1**

(12)  **EUROPEAN PATENT SPECIFICATION**

(45) Date of publication and mention
of the grant of the patent:
**31.07.2024  Bulletin 2024/31**

(21) Application number: **20306230.2**

(22) Date of filing: **16.10.2020**

(51) International Patent Classification (IPC):
*H04L 1/00* (2006.01)    *H04L 5/00* (2006.01)
*H04L 27/26* (2006.01)

(52) Cooperative Patent Classification (CPC):
**H04L 1/0041; H04L 1/0071; H04L 1/0072;**
**H04L 27/2615;** H04L 5/0007; H04L 5/0053

(54) **IMPROVED DEVICE AND METHOD FOR TRANSMITTING CONTROL DATA WITH LOW PEAK-TO-AVERAGE POWER RATIO**

VERBESSERTE VORRICHTUNG UND VERFAHREN ZUR ÜBERTRAGUNG VON STEUERUNGSDATEN MIT NIEDRIGEM SPITZENLEISTUNG-ZU-MITTELLEISTUNG-VERHÄLTNIS

DISPOSITIF AMÉLIORÉ ET PROCÉDÉ DE TRANSMISSION DE DONNÉES DE COMMANDE À FAIBLE RAPPORT PUISSANCE DE CRÊTE/PUISSANCE MOYENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2022  Bulletin 2022/16**

(73) Proprietor: **Eurecom**
**06410 Biot (FR)**

(72) Inventor: **KNOPP, Raymond**
**06410 BIOT (FR)**

(74) Representative: **Atout PI Laplace**
**Immeuble Up On**
**25 Boulevard Romain Rolland**
**CS 40072**
**75685 Paris Cedex 14 (FR)**

(56) References cited:
**WO-A1-2008/156338    GB-A- 2 547 041**

**Description**

**TECHNICAL FIELD**

The invention generally relates to digital communications and in particular to a device and a method for transmitting control data with low Peak-to-Average Power Ratio (PAPR).

**BACKGROUND**

Mobile communication systems are progressing at an accelerated pace, in order to satisfy increasing demands in terms of real-time services and applications with higher capacities.

Mobile communication systems are rapidly progressing from a 4th generation (4G) mobile communication system to the future 5th generation (5G) mobile communication systems which are being standardized to provide rich, reliable and hyper-connected communications. In particular, 5G New Radio presents significant challenges.

A mobile communication system comprises a transmitter that transmits digital data comprising information symbols to one or more receivers through a transmission channel. The receiver receives and decodes the transmitted signal using a reverse processing as the one implemented at the transmitter. The digital data transmitted by the transmitter can comprise user data bits and control data bits.

The main existing transmission control data formats for 5G NR systems comprise uplink control channels, such as physical uplink control channel (PUCCH) and physical random access channel (PRACH). Control data can also be multiplexed or transmitted exclusively on the physical uplink shared channel (PUSCH). Different transmission formats exist for such control channels such as for example LTE/NR PUCCH formats 0, 1, 2, 3 and 4 considered in current 3GPP systems (LTE stands for "Long Term Evolution").

A significant challenge for improving the transmission of such control channel data is to provide the transmitter with a capacity of transmitting small payloads (around tens of bits) with low probability of error at very low signal-to-noise ratios.

Such challenge can be generally achieved both by optimizing the energy efficiency of the transmit waveform through:

- a minimization of the peak-to-average power ratio (PAPR), and
- a design of strong structured coding strategies permitting low-complexity detection algorithms.

Known solutions to reduce PAPR include peak windowing, scaling, and clipping. However, such approaches generate interference and distortions in the OFDM modulated signal which requires a further filtering to mitigate the interferences and distorsions.

An exemplary approach to reduce PAPR has been also described in GB 2547041 A. GB2547041 suggests to encode information using channel coding, then to perform modulation, then to perform in multiple parallel branches different interleaving and scrambling, to generate a signal and to combine the signal with a specific PUCCH waveform. Then the waveform having the lowest PAPR is selected for transmission.

WO2008156338 discloses encoding and interleaving of control information. Encoded and interleaved control channel information are allocated to a control channel which is associated to a specific Zadoff-Chu sequence characterized by a specific Zadoff Chu offset. The mapping between control channel ID and Zadoff chu sequence offset varies depending on the sub-band and the slot.

Existing decoding algorithms used at the receivers to decode received signals corresponding to the current control channel formats (such as PUCCH) are based on sub-optimal reduced-complexity approaches. Such approaches consist of least-squares channel estimation based on the DMRS signals (DMRS stands for Demodulation Reference Signal) followed by quasi-coherent detection and soft-combining of repetitions from rate matching. These two operations yield soft-decisions for each of the coded bits. In the case of the RM code for example, a permutation is then applied to the 32 received soft-decisions to recuperate the bi-orthogonal structure of the code which is then amenable to reduced-complexity decoding via a fast Hadamard Transform as described in US8315185B2.

For the polar-coded case, the soft-decisions are passed to one of the reduced-complexity polar decoding algorithms as described in Fast List Decoders for Polar Codes by Gabi Sarkis, Pascal Giard, Alexander Vardy, Claude Thibeault, and Warren J. Gross, IEEE Jounal on Selected Areas in Communications, VOL. 34, NO. 2, FEBRUARY 2016. In these two existing approaches, the algorithms are sub-optimal as the detection method uses separate channel estimation and quasi-coherent detection. Another possible solution would be to use a fully non-coherent receiver using the DMRS signals. However, such solution involves an increase in complexity, especially for a RM coded case with longer bit lengths.

There is accordingly a need for a transmission device and method that ensure low PAPR.

## Summary of the invention

To address these and other problems, independent claim 1 defines a transmitter device for transmitting a digital input message corresponding to control data used in a control channel (for example PUCCH, PUSCH or PRACH) according to the invention. Independent claim 10 defines the corresponding method of transmitting a digital input message according to the invention.

Preferred embodiments are defined in the dependent claims.

The embodiments of the invention accordingly improve the probability of correct detection.

Advantageously, the embodiments of the invention are not required to use DMRS signals.

Further advantages of the present invention will become clear to the skilled person upon examination of the drawings and the detailed description.

## Brief description of the drawings

The accompanying drawings, which are incorporated in and constitute a part of this specification, illustrate various embodiments of the invention together with the general description of the invention given above, and the detailed description of the embodiments given below.

Figure 1 schematically represents an exemplary communication system implementing a transmitter according to some embodiments;

Figure 2 is a block diagram representing a transmitter, according to certain embodiments of the invention.

Figure 3 is a flowchart depicting a transmission method, according to an exemplary embodiment of the invention.

## Detailed description

Embodiments of the present invention provide devices and methods for transmitting control data that enable minimizing the Peak-to-Average Power Ratio (PAPR).

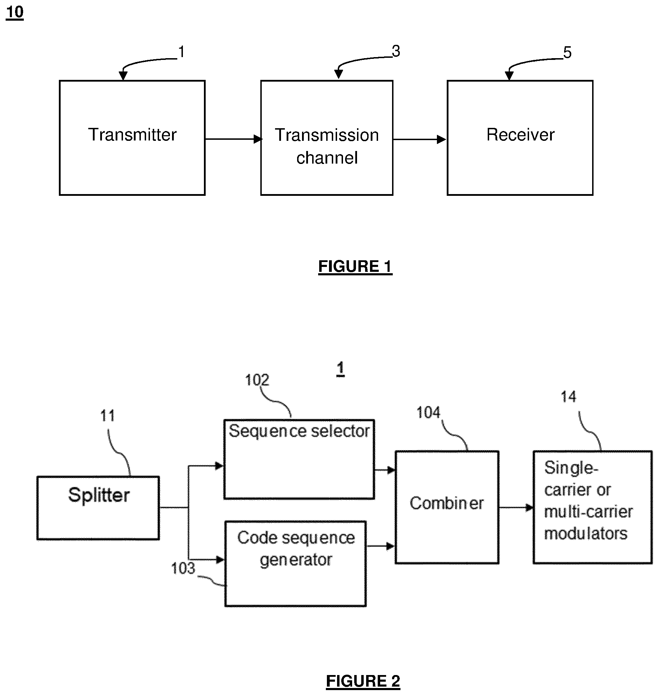

Figure 1 illustrates an exemplary communication system 10 in which embodiments of the invention can be implemented.

The communication system 10 may be for example a wireless communication system. The following description of embodiments of the invention will be made mainly with reference to a wireless communication system for illustration purpose although the skilled person will readily understand that the invention can also apply to other types of communication systems such as a wired system (for example optical fiber communication system).

The communication system 10 may comprise at least one transmitter device 1 (also referred to hereinafter as a "transmitter") configured to transmit a plurality of information symbols to at least one receiver device 5 (hereinafter referred to as "receiver") through a transmission channel 3.

The receiver 5 may be configured to receive the signal transmitted by the transmitter 1 and decode the received signal to recover the original data.

The transmission channel 3 may be any transmission channel adapted to transmit information symbols from the transmitter device 1 to the receiver device 5, depending on the type of the communication system, such as for example a wired connection channel, a wireless medium, an underwater communication channel, etc.

In an application of the invention to wireless communication systems such as ad-hoc wireless networks used in local area communications, wireless sensor networks and radio communication systems (e.g. LTE, LTE-advanced, 5G and beyond), the transmitter 1 and/or the receiver 5 may be any type of fixed or mobile wireless device configured to operate in a wireless environment.

The transmission channel 3 may be any wireless propagation medium adapted to such devices.

The transmitter 1 and/or the receiver 5 may be fixed or mobile and/or may be remotely monitored and/or controlled. The transmitter 1 and/or the receiver 5 may be equipped with power sources that provide power to the different components ensuring the operation of these devices (e.g. dry cell batteries, solar cells, and fuel cells).

The transmission channel 3 may represent any wireless network enabling IoT. Exemplary wireless networks comprise low-power short range networks and LPWANs. Exemplary LPWAN technologies comprise LTE-NB1 and NB-IoT.

Further, the transmission channel 3 may accommodate several pairs of transmitters 1 and receivers 5. In such embodiments, multiple access techniques and/or network coding techniques may be used in combination with error correction codes and modulation. Exemplary multiple access techniques comprise Time Division Multiple Access (TDMA), Frequency Division Multiple Access (FDMA), Code Division Multiple Access (CDMA), and Space Division Multiple Access (SDMA).

The transmission channel 3 may be a noisy channel. For example, the noise may result from the thermal noise of the system components and/or the intercepted interfering radiation by antennas. Other exemplary sources of noise comprise switching, manual interruptions, electrical sparks and lightning. In some embodiments, the total noise may be modeled by an additive white Gaussian noise (AWGN).

The transmission channel 3 may be a multipath channel using single-carrier or multi-carrier modulation formats such as OFDM (Orthogonal Frequency Division Multiplexing) for mitigating frequency-selectivity, interference and delays.

In some embodiments, data transmission in the communication system 10 may correspond to an uplink communication scenario during which the receiver 5 is configured to receive data from one or more transmitters 1 operating in a wireless environment. The receiver 5 may be a base station, a relay station, an eNodeB/gNodeB in a cellular network, an access point in a local area network or in ad-hoc network or any other interfacing device operating in a wireless environment. The transmitter 1 may be, without limitation, a mobile phone, a computer, a laptop, a tablet, a drone, an IoT device etc.

According to some embodiments, the transmitter 1 and/or the receiver 5 may be equipped with a plurality of transmit and/or receive antennas. In such embodiments, space-time coding and/or space-time decoding techniques may be used in combination with coded modulations for encoding data both in the time and space dimensions, thereby exploiting space and time diversities of multiple antennas.

The receiver 5 can be also integrated in the base stations. The receiver 5 may be configured to receive a signal $y_P$ transmitted by the transmitter 2 in a wireless channel. The channel may be noisy (for example channel with Additive White Gaussian Noise (AWGN) subjected to fading). The signal transmitted by the transmitter 1 may be further affected by echoes due to the multiple paths and/or the Doppler effect due to the transmitter and receiver having a non-zero relative velocity.

The transmitter 1 is configured for transmitting a digital input message m corresponding to control data used in a control channel through the communication channel 3.

According to some embodiments, the control data encoded at the transmitter 1 correspond to control data used in physical control channels such as uplink control channels.

Exemplary uplink physical control channels comprise PUCCH ('Physical Uplink Control Channels'), the control portion of PUSCH (Physical Uplink Shared Channel) and PRACH (Physical Random Access Channel). The Physical Random Access Channel (PRACH) may be used by an uplink user to contact a receiver (eNB base station for example).

Although the description will be made mainly with reference to uplink control channels such as PUCCH or the control portion of PUSCH, for illustration purpose, the skilled person will readily understand that the invention also applied to other uplink control channels. Exemplary PUCCHs comprise the LTE/NR PUCCH format 2 and the LTE/NR PUCCH formats 3 and 4 considered in current 3GPP systems.

The PAPR refers to a power characteristic that defines the average output power level of the power amplifier used in the transmitter 1 relative to the peak power. When the PAPR is high, the power amplifier of the transmitter 1 has to operate at a lower average power level. In contrast, a low PAPR enables the power amplifier at the transmitter to operate at a higher average power level with respect to the peak power. The PAPR of OFDM signals is defined as the ratio between the maximum instantaneous power and its average power.

Considering for example, a transmission of PUCCH data where the transmitted waveform makes use of prior information regarding synchronization with respect to the time window of the receiver 5 (for example a gNodeB), several PUCCH transmission formats in 5G NR can be used. The inventors have determined and analyzed corresponding PAPR values obtained for different PUCCH formats using a prior art transmission method, as described in the table 1 below:

**Table 1**

| PUCCH format | Transmission method | PAPR dB |
|---|---|---|
| 0 | 1-3 bit orthogonal transmission, cyclic time-shifts of a low-PAPR quaternary sequence, $L = 1,2$, $K = 1$ | 2.42 - 2.80 dB |
| 1 | 1-2 bit payload, orthogonal transmission (for 1-bit), non-orthogonal transmission (for 2-bit), low-PAPR frequency-domain sequences with orthogonal spreading in time, use of demodulation reference signals (DMRS), $L = 4,5, ... ,14$, $K = 1$ | 2.42 - 2.80 dB |
| 2 | >2 bit payload, non-orthogonal transmission, binary code, binary rate-matching, QPSK modulation, $L = 1,2$, arbitrary $K$ | 9.1 dB at 1% outage, 6.66 dB average |

(continued)

| PUCCH format | Transmission method | PAPR dB |
|---|---|---|
| 3 | >2 bit payload, non-orthogonal transmission, binary code, binary rate-matching, $\pi/2$-BPSK, QPSK modulation, DFT precoding, $L = 4,5, ... ,11$, $K = 2^{\alpha}3^{\beta}5^{\gamma}$ | QPSK: 6.30dB at 1% outage, 4.28dB average $\pi/2$-BPSK: 4.78dB at 1% outage, 3.28 dB average |
| 4 | >2 bit payload, non-orthogonal transmission, binary code, binary rate-matching, $\pi/2$-BPSK, QPSK modulation, DFT precoding, orthogonal time-spreading, $L = 4,5, ...,11$, $K = 1$ | QPSK: 6.30dB at 1% outage, 4.28dB average $\pi/2$-BPSK: 4.78dB at 1% outage, 3.28 dB average |

Table 1 shows that:

- Formats 1, 3 and 4 correspond to low-PAPR configurations with multiple-symbols;

- Format 0 has low PAPR but was not designed for coverage because of the limitation to transmission in 1 or 2 symbols and thus is energy-limited.

In prior art approaches, the message index m corresponding to PUCCH format 0 control data is combined with a pseudo-random integer derived from system and user-specific parameters to select a low-PAPR quaternary sequence from a set of optimized sequences and to choose a cyclic time-shift of the selected sequence.

Format 2 has neither low-PAPR nor multi-symbol transmission for coverage and is used primarily in small-cell configurations. Format 1 uses low-PAPR sequences similar to Format 0 but without a message dependent cyclic time-shift. However, in prior art approaches, the sequence for PUCCH format 1 is further modulated in amplitude depending on the 1 or 2 bit message and repeated across $L - L_{DMRS}$ symbols, where $L_{DMRS}$ is the number of so-called DMRS symbols used. The DMRS symbols are not message dependent and can be used by the receiver (gNodeB) to resolve channel uncertainty through explicit channel estimation or through other existing methods. Format 1 using a prior art approach exhibits a bounded PAPR less than 2.8 dB. A prior art transmitter for transmission of PUCCH Format 3 and 4 use DFT-precoded QPSK or $\pi/2$-BPSK for low-PAPR rather than optimized quaternary sequences. For the case of $\pi/2$-BPSK, the prior art approaches for such formats 3 and 4 provide a PAPR of 4.78dB at a 1% outage for randomized payloads.

Similar to Format 1, Formats 3 and 4 also make use of 1, 2 or 4 DMRS which are similar payload-independent signals. a prior art transmitter for Formats 3 and 4, makes use, in terms of channel coding, of classical length 32 Reed-Muller codes for 3-11 bit payloads (3GPP Technical Specification 38.212: [38212] NR; Multiplexing and Channel Coding, 3GPP Technical Specification, Release 16, V16.3, 2020-10-01). The 32-bit encoded bit stream is shortened or lengthened with rate-matching which amounts to truncation or repetition to fit the available resources. For more than 11 bits, the 3GPP polar code (3GPP Technical Specification 38.212) with interleaving and a different rate-matching procedure is used in the prior art. Following rate-matching and interleaving, the bit stream is scrambled using a pseudo-random sequence prior to modulation, in both cases. A prior art transmitter for Format 4 also includes a time-domain orthogonal spreading function on top of the modulation to allow for multiple-access.

The transmitter 1 according to the embodiments of the invention improves the probability of correct detection compared to such existing solutions, even in extreme coverage scenarios which are characterized by low signal-to-noise ratio.

Figure 2 represents a transmitter 1 corresponding to a Low-PAPR Concatenated Coding Scheme, according to some embodiments of the claimed invention.

The transmitter 1 is configured to transmit a digital input message $m$ corresponding to control data used in a control channel through the communication channel 3. The control channel may be for example an uplink control channel such as PUCCH, a control component of PUSCH or PRACH.

Although the invention has particular advantages for downlink control channels, it should be noted that some aspects of the invention may be also applied to downlink control channels.

The input message $m$ is defined as:

$$m = 0,1, ..., 2^B - 1 \quad (1)$$

In Equation (1), *B* represents the number of channel bits constituting the message *m.*

The signal received at the receiver may be written as:

$$y_p = \mathrm{H}_p \mathrm{x}(m) + z_p \ (2)$$

In equation (2), $y_p$ represents the signal vector in *N* complex dimensions received on a receiver antenna port *p*, x(*m*) designates the *N*-dimensional modulated vector transporting *B* channel bits corresponding to the message $m=0,1,...,2^B$-1, and $z_p$ represents the additive white Gaussian noise having real and imaginary components being independent and have variance $\sigma^2$ in each dimension. Further, the matrix $\mathrm{H}_p$ is a $N \times N$ complex diagonal designating the complex value of the channel matrix representing the communication channel. The channel matrix $\mathrm{H}_p$ has arbitrary components unknown to the receiver.

In some embodiments, the modulated signal may satisfy $\|\mathrm{x}(m)\| = c \ \forall m$, where c is an arbitrary constant.

In some embodiments, such as in the 3GPP 5G NR systems, the components of the modulated signal x(*m*) and the received signal $y_p$ may represent samples in frequency and time.

The transmitter 1 is configured to transmit a digital input message corresponding to control data used in a control channel (which may be an uplink control channel, such as for example PUCCH, PUSCH or PRACH) through the communication channel 3.

According to the claimed invention, the transmitter 1 comprises:

- A binary code generator 100 configured to generate a binary code comprising components denoted $f_i$ from the B bits of the message;
- A binary interleaver 102 configured to apply interleaving to the binary code, which provides an interleaved binary code comprising components denoted $g_i$;
- A sequence selector 103 configured to determine a sequence $\mathbf{r}_l(m_0)$ comprising a set of low peak-to-average power ratio vectors which depends on the message , from the interleaved binary code.

According to the claimed invention, the sequence is associated with a sequence index *l*.

According to the claimed invention, the transmitter 1 further comprises single carrier or a multi-carrier modulators 14, one modulator being associated with each transmit antenna. The OFDM modulators 14 are configured to apply single carrier or a multi-carrier modulation to the sequence of low peak-to-average power ratio vectors $\mathbf{r}_l(m_0)$ and transmit the modulated sequence $\mathbf{r}_l(m_0)$ over the communication channel using the transmit antennas.

Accordingly, the transmission scheme is based on a non-coherent serial concatenation of a binary code generator 100, a binary interleaver 102 and a mapping to a low-PAPR sequence performed by the sequence selector 103.

Each single carrier or multi-carrier modulator 14 is configured to convert the constructed codeword or vector of spatially multiplexed symbols from the time domain to the frequency domain using a single carrier or a multi-carrier modulation technique.

According to the claimed invention, the single carrier or multi-carrier modulators 14 are OFDM modulators (OFDM stands for Orthogonal Frequency-Division Multiplexing) configured to apply OFDM modulation the combined sequence.

The following description of some embodiments of the invention will be made mainly with reference to OFDM modulation using OFDM modulators for illustration purpose only although the invention applies to other types of single-carrier or multi-carrier modulation.

The OFDM modulators 14 are configured to convert the modulated symbols from the time domain to the frequency domain using a multicarrier modulation technique and spread the signals thus obtained over the $n_t$ transmission antennas of the transmitter 1, each transmission antenna being associated with an OFDM modulator.

Signals may be sent from the transmit antennas optionally after filtering, frequency transposition and amplification by at least one power amplifier provided at the transmitter 1.

The symbols of the vector **x**(m) may represent samples in both time and frequency. In particular, the frequency dimensions may be adjacent carriers in a multi-carrier symbol (OFDM symbol) and the time dimensions may refer to different multi-carrier symbols. In general, a time or frequency dimension is designated by a Resource Element.

In the embodiments using OFDM modulation, the number *N* of dimensions of the received signal $y_p$ may be a multiple of *KL* (i.e. N is the product of KL with some integer $\alpha$), with *L* represents the number of OFDM symbols on which the information is spread and *K* represents the minimal number of physical resource blocks (OFDM carriers). The multiple may be the number of OFDM carriers per resource block. $\alpha K$ represents the number of signaling dimensions per vector.

More generally, $\alpha K$ represent the number of channel dimensions per symbol of the outer channel code. In the context of some time-domain spread-spectrum systems, $\alpha K$ may be the spreading factor. *L* represents the time-window over which the message is encoded in the sense that the total time the channel is used to convey the message is directly proportional to $L$.

As used herein, a Resource Element (RE) refers to the smallest defined unit consisting of one OFDM subcarrier during one OFDM symbol interval. Each Resource Block (RB) designates a number of Resource Elements (RE). Resource blocks (RB) are used to map physical channels to resource elements RE.

In a 3GPP application of the invention, the integer $\alpha$ is equal to 12 so that the number $N$ is given by $N = 12KL$. Accordingly, each resource block contains 12 complex dimensions or resource elements over which coding is performed. In such 3GPP application, $K$ may be chosen in the range of 1 to 16 for example. Further, the number of symbols $L$ may be chosen in the range of 1 to 14 symbols for example, or may be more important if multiple slots are used to signal the B bits.

The following description will be made mainly with reference to the number of signaling dimensions per vector $\alpha K$ equal to $12K$ ($\alpha = 12$) used in a 3GPP OFDM embodiment. However, the skilled person will readily understand that the invention is not limited to such value of $\alpha K$ and similarly applies to any number of dimensions.

The sequence selector 103 ensures that the low PAPR sequence varies from a sequence index (corresponding to a symbol index in an embodiment using OFDM modulation) to another sequence index.

The transmitter 1 may further comprise a space-time encoder (not represented) for delivering a code word using a space time code before performing OFDM modulation. The space-time encoder may be configured to perform space-time coding or spatial multiplexing in embodiments in which the transmitter 1 is equipped with a plurality of transmit antennas.

It should be noted that there are no demodulation reference signals (DMRS) required in such transmission scheme.

The sequence of low-PAPR vectors $\mathbf{r}_l(m_0)$, may advantageously include a randomization of the resource elements both in the form of using different vectors in each symbol and using different frequency positions if the vectors have less non-zero elements than the total number of dimensions.

In some embodiments, the sequence $\mathbf{r}_l(m_0)$ of low peak-to-average power ratio vectors provided by the sequence selector 103 may comprise $L$ vectors of dimension $\alpha K$, where $L$ designates the number of OFDM symbols and $K$ representing the minimal number of resources. In such embodiments, the index $l$ of the sequence of low-PAPR vectors $\mathbf{r}_l(m_0)$ may be equal to $l=0,1,...,L-1$.

In one embodiment, the number of bits delivered by the binary code generator 100 and the interleaver 102 may be equal. In the following description the number of bits delivered by the binary code generator 100 and the interleaver 102 will be considered as equal to $E$.

In one embodiment of the claimed invention, the number $E$ of bits delivered by the binary code generator and the interleaver may be equal:

$$E = L\lfloor \log_2 \alpha K \rfloor \quad (3)$$

The output of the transmitter 1 may further comprise $\alpha KL$ resource elements.

In the following description of some embodiments, the code output of the binary code generator 100 will be designated by $f_i$, $i = 0,1, ..., E - 1$ and the output of the binary interleaver 103 will be designated by $g_i$, $i = 0,1, ...,E - 1$.

In one embodiment, the binary code may be a 3GPP polar code. However, the skilled person will readily understand that the invention is not limited to a polar code and may apply to other binary codes such as LDPC codes, turbo codes, convolutional codes, tail-biting convolutional codes, binary block codes.

In some embodiments, such as embodiments using 3GPP polar code, the binary code generator 100 may be configured to generate an initial binary code comprising $N$ bits. The binary code generator 100 may comprise a converter (implementing a polar rate-matching method) for converting the $N_c$ generated binary ($N_c = 2^n$) coded bits of the initial binary code into $E$ bits which are input to the interleaver (102).

The $E$ bits thus obtained are then input to the interleaver 102 prior to the sequence selector 103.

In some embodiments, the interleaver 102 may be configured to ensure that more than one bit of the binary code provided by the binary code generated, in a group of $\lfloor \log_2 \alpha K \rfloor$ adjacent coded bits, do not jointly contribute to a particular low-PAPR sequence.

In one embodiment of the claimed invention, the interleaver 102 may be configured to implement a mapping of the coded bits provided by the binary code generator 100 to a low-PAPR sequence, the mapping being defined by a function $f()$ such as each component $g_i$ of index $i$ of the interleaved binary code is equal to:

$$g_i = f_{\left(i \bmod \left(\frac{E}{L}\right)\right)L + \lfloor iL/E \rfloor} \quad (4)$$

In equation (4), $L$ represents the number of OFDM symbols and $E$ represents the number of bits delivered by the binary code generator 100.

According to the claimed invention, the $E/L$ -bit representation of $E/L$ adjacent output bits from the $g_i$ sequence in symbol $l$ may be defined by:

$$m_l \in \{0, 1, \dots, 2^{\frac{E}{L}} - 1\} \quad (5)$$

In some embodiments, the sequence selector 103 may be configured to determine the low PAPR sequence $\mathbf{r}_l(m_l)$ comprising a set of low peak-to-average power ratio vectors such that the peak-to-average power ratio of the resulting time waveform after OFDM modulation is minimized (first selection criterion).

The resulting time waveform $s_l(m_l, t)$ after the OFDM modulation performed by the OFDM modulators is given by:

$$s_l(m_l, t) = \sum_{k=0}^{\alpha K - 1} r_{k,l}(m_l) \, e^{-j2\pi k \Delta f(t - N_{CP,l} T_c)} \quad (6)$$

In Equation (6), $\Delta f$ and $T_c$ correspond to physical parameters relating to the OFDM modulation. The additional parameter $N_{CP,l}$ is the cyclic prefix length in samples.

In a 3GPP 5G NR embodiment for example, $\Delta f$ can take on the values 15,30,60,120,240 kHz and $T_c$ = 508.64 $ps$.

For $t$ in an interval $t_{\text{start},l} \leq t \leq t_{\text{start},l} + (N_u^{\mu} + N_{CP,l}) T_c$ corresponding to the time interval of OFDM symbol $l$ starting at time $t_{\text{start},l}$. In Equation (6), $\Delta f$ and $T_c$ correspond to physical parameters relating to the OFDM modulation. The additional parameter $N_{CP,l}$ is the cyclic prefix length in samples and $N_u^{\mu}$ is the OFDM symbol size in samples. The cyclic prefix ensures that the signal at time $t_{\text{start},l} \leq t \leq t_{\text{start},l} + N_{CP,l} T_c$ is identical to the signal in the time interval $(t_{\text{start},l} + N_u^{\mu} T_c) \leq t \leq (t_{\text{start},l} + (N_u^{\mu} + N_{CP,l}) T_c)$.

It should be noted that Equation (6) corresponds to a simple case provided herein to facilitate the understanding of the invention. In some embodiments, an alternative to equation (6) may be used depending on the application of the transmitter. For example, a more complex variant of Equation (6) may be used in order to into account for small physical frequency offsets or particularities of the resource grid in a 5G NR implementation, for certain air interface configurations.

The PAPR is defined is then defined as:

$$\text{PAPR}(\mathbf{r}_l(m_l)) = \frac{\max_t |s_l(m_l, t)|^2}{\lim_{T \to \infty} \frac{1}{T} \int_0^T |s_l(m_l, t)|^2 dt} \quad (7)$$

In Equation (7), $\max_t |s_l(m_l, t)|^2$ represents the maximum instantaneous power and $\lim_{T \to \infty} \frac{1}{T} \int_0^T |s_l(m_l, t)|^2 dt$ represents its average power.

For large enough value of the number $N$, equation (7) can be rewritten as :

$$\text{PAPR}(\mathbf{r}_l(m_l)) \approx \frac{\max_{n=0,1,\dots,N} \left| \sum_{k=0}^{\alpha K - 1} r_{k,l}(m_l) \, e^{-j2\pi k n / N} \right|^2}{\sum_{k=0}^{\alpha K - 1} \left| r_{k,l}(m_l) \right|^2} \quad (8)$$

Equation (8) may be implemented using a fast Fourier Transform when optimizing the vectors for low PAPR.

In some embodiments, the sequence selector 103 may be further configured to determine the low PAPR sequence $(\mathbf{r}_l(m_l))$ of low peak-to-average power ratio vectors that limits the number of non-zero elements in the low peak-to-average power ratio vectors (second selection criterion).

The second criterion for choosing the low-PAPR vectors consisting in minimizing the number of non-zero elements enables both minimizing the complexity in the detection of the overall code sequence $\mathbf{x}(m)$ and also mitigating the effects of multipath propagation.

For example, in the 3GPP specification 38.211 ([38.211] NR; Physical Channels and Modulation, 3GPP Technical Specification, Release 16, V16.3, 2020-10-01), sequences of length 6,12,18 and 24 are proposed using vectors with elements in the quaternary set (QPSK modulation), $e^{j\pi q/4}$, $q$ = -3, -1,1,3. In a 3GPP embodiment of the invention, the 3GPP sequences can be augmented to include new minimum PAPR sequences of length 3 and 6 in an 8-ary set, $e^{j\pi q/4}$, $q$ = 0,1,2,3,4,5,6,7, as shown respectively in Table 2 which represents Minimal-PAPR sequences of length 3 (for a PAPR equal to 2.22 dB) and Table 3 which represents Minimal-PAPR sequences of length 6 (for a PAPR equal to 2.32 dB) :

**Table 1**

| index | 8-ary sequence |
|-------|----------------|
| 0 | (0,0,4) |
| 1 | (0,1,6) |
| 2 | (0,2,0) |
| 3 | (0,3,2) |
| 4 | (0,4,4) |
| 5 | (0,5,6) |
| 6 | (0,6,0) |
| 7 | (0,7,2) |

**Table 2**

| Index | 8-ary sequence | Index | 8-ary sequence |
|-------|----------------|-------|----------------|
| 0 | (0,0,1,4,6,3) | 16 | (0,4,1,0,6,7) |
| 1 | (0,0,3,5,1,6) | 17 | (0,4,3,1,1,2) |
| 2 | (0,0,5,3,7,2) | 18 | (0,4,5,7,7,6) |
| 3 | (0,0,7,4,2,5) | 19 | (0,4,7,0,2,1) |
| 4 | (0,1,1,7,6,2) | 20 | (0,5,1,3,6,6) |
| 5 | (0,1,3,7,2,0) | 21 | (0,5,3,3,2,4) |
| 6 | (0,1,5,0,5,3) | 22 | (0,5,5,4,5,7) |
| 7 | (0,1,7,6,3,7) | 23 | (0,5,7,2,3,3) |
| 8 | (0,2,1,1,7,4) | 24 | (0,6,1,5,7,0) |
| 9 | (0,2,3,2,2,7) | 25 | (0,6,3,6,2,3) |
| 10 | (0,2,5,2,6,5) | 26 | (0,6,5,6,6,1) |
| 11 | (0,2,7,3,1,0) | 27 | (0,6,7,7,1,4) |
| 12 | (0,3,1,6,5,5) | 28 | (0,7,1,2,5,1) |
| 13 | (0,3,3,4,3,1) | 29 | (0,7,3,0,3,5) |
| 14 | (0,3,5,5,6,4) | 30 | (0,7,5,1,6,0) |
| 15 | (0,3,7,5,2,2) | 31 | (0,7,7,1,2,6) |

As shown in the tables 2 and 3, there are no two sequences that are cyclic shifts of each other when transformed by inverse discrete Fourier transforms of order 3 (Table 1) and 6 (Table 2). The length 6 sequences have lower PAPR than the 3GPP sequences (Table 5.2.2-1 in 3GPP specification 38.211).

In one embodiment, the elements of the low peak-to-average power ratio vectors may have only one non-zero element set to 1.

Such simplest case where the elements of $\mathbf{r}_l(m_l)$ have only one non-zero element set to 1 corresponds to a single resource element used among the $\alpha K$ and results in the minimum complexity receiver (5) for the overall code sequence. Furthermore, it provides the lowest PAPR and could be used for extreme coverage scenarios.

In the following description, the number of non-zero carriers in $\mathbf{r}_l(m_l)$ will be denoted $K_0$. In an exemplary

application of the invention to 3GPP, $K_0 \in \{1,3,6,12,24\}$.

Although limited here to 24 dimensions, longer sequences may be used depending on the needs. For instance, truncated or extended Zadoff-Chu sequences can be used to provided reasonably-limited PAPR.

The transmitted sequence in each OFDM symbol is indexed by two parameters $(k_{l,0}(m_l),k_{l,1}(m_l))$, where $k_{l,0}(m_l)$ designates the frequency offset and $k_{l,1}(m_l)$ designates a cyclic-shift. The frequency offset $k_{l,0}(m_l)$ may be in the range

$k_{l,0}(m_l) = \quad 0,1,\dots,\dfrac{\alpha K}{K_0} - 1 \quad$ and corresponds to the first non-zero element in the low PAPR sequence vector. The parameter $k_{l,1}(m_l)$ corresponding to a cyclic-shift may be in the range $k_{l,1}(m_l) = 0,1,\dots,K_0 - 1$.

Considering $\mathbf{r}_l^0$ denoting the base sequence used for a symbol $l$, the transmitted sequence is then given by:

$$r_{l,k}(m_l) = \begin{cases} r_{l,k-k_0}^0 e^{-j2\pi k_{l,1}(m_l)(k-K_0)/K_0} & k_{l,0}(m_l) \le k < k_{l,0}(m_l) + K_0 \\ 0 & \text{otherwise} \end{cases} \qquad (9)$$

For example, if $K_0 = 1$, $\mathbf{r}_l^0 = 1$.

In some embodiments, the frequency offset $k_{l,0}(m_l)$ and the cyclic-shift $k_{l,1}(m_l)$ may depend on the transmitted message and/or may be scrambled by a pseudo-random sequence initialized by system parameters such as for example and without limitation : the cell identification number and/or the user-dependent higher-layer configuration and/or user identification numbers. This ensures both whitening of the spectral characteristics of the transmitted waveform and exploiting frequency diversity to fading and interference through frequency hopping via $k_{l,0}$.

In one embodiment, the frequency offset $k_{l,0}(m_l)$ and the cyclic-shift $k_{l,1}(m_l)$ may be equal to:

$$k_{l,0}(m_l) = (k_0(m_l) + k'_{l,0}) \bmod \frac{\alpha K}{K_0} \quad (10)$$

$$k_{l,1}(m_l) = (k_1(m_l) + k'_{l,1}) \bmod K_0 \quad (11)$$

In Equations (10) and (11), $k'_{l,n}$ designates the pseudo-random components that are symbol and system parameter dependent, while $k_n(m_l)$ are the message dependent components.

The payload sizes may vary as a function of the chosen code rate of the code and rate matching parameters.

For example, in an exemplary application of the invention to a binary code of 3GPP Polar code type, assuming that the overall code rate of the binary code is bound to around .5, Table 1 provides the typical payload sizes (excluding the 6 or 11-bit CRC) along overall code rate in parentheses for exemplary nominal parameters $L$ = 14,28 and $K$ = 1,2,3,4,5,6. Table 1 represents the input bit length (excluding CRC) and the overall spectral efficiency for rate .5 binary code.

**Table 4**

| K | L=14 | L=28 |
|---|---|---|
| 1 | 15 (.125) | 31 (.125) |
| 2 | 17 (.083) | 45 (.083) |
| 3 | 24 (.069) | 59 (.069) |
| 6 | 31 (.042) | 73 (.042) |

In order to allow for longer payloads, transmission over longer symbols periods (e.g. 2 slots) and more than one PRB may be used.

It should be noted that the receiver 5 implements a reverse processing of the processing implemented in transmission.

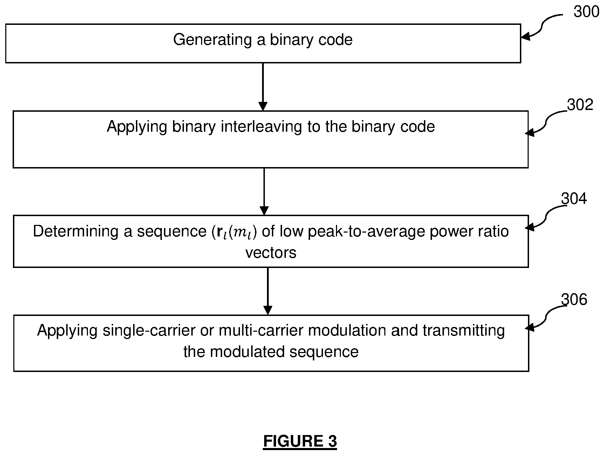

Figure 3 is a flowchart representing a method of transmitting a digital input message corresponding to control data used in an control channel (for example uplink control channel such as PUCH, PUSCH or PRACH) through a communication channel, the message m comprising a number B of bits.

In step 300, a binary code ($f_i$, $i = 0,1, ... , E$ - 1) is generated from the message.

In step 302, interleaving is applied to the binary code, which provides an interleaved binary code ($g_i$, i = 0,1, ..., $E$ - 1).

In step 303, a sequence ($\mathbf{r}_l(m_l)$) of low peak-to-average power ratio vectors which depends on the message and on the sequence index is determined from the interleaved binary code.

In step 304, a single-carrier or multi-carrier modulation may be applied to the sequence obtained in step 303, and the modulated sequence may be then transmitted over the communication channel 3 using transmit antennas.

The communication system 10 according to the embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 10 may be a wireless network, for example a wireless IoT/M2M network representing low energy power-consumption/long battery life/low-latency/low hardware and operating cost/high connection density constraints such as low-power wide area networks and low-power short-range IoT networks. Exemplary technologies used in such applications may comprise 5G, LTE-NB1 (Long Term Evolution-Machine to Machine, Narrow Band) and NB-IoT (NarrowBand IoT).

The communication system 10 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

The transmitter 1 and/or the receiver 5 may be any physical internet-enabled device/object provided with required hardware and/or software technologies enabling communication over Internet. The transmitter 1 and/or the receiver 5 may be any standard internet connected-devices such as desktop computers, servers, virtual machines laptops, smart-phones, tablets. In some applications, the transmitter 1 and/or the receiver 5 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

In particular, although the invention has particular advantages in embodiments using 103OFDM modulation, the invention also applies to other type of single-carrier and multi-carrier modulation. Depending on the type of single-carrier or multi-carrier modulation, the sequence selector 103 may select time or frequency-domain signals which have low or zero cross-correlation and desirable spectral and energy characteristics. For example, in the case of time-domain signals for narrowband channels, the sequence selector 103 may select among a set of modulated Walsh-Hadamard sequences with appropriate time-domain filtering for particular system constraints and very low-PAPR.

Additional advantages and modifications will readily appear to those skilled in the art. The invention in its broader

**EP 3 985 894 B1**

aspects is therefore not limited to the specific details, representative methods, and illustrative examples shown and described.

**Claims**

1. A transmitter device (1) for transmitting a digital input message corresponding to control data used in a control channel, PUCCH or PRACH, through a communication channel, the transmitter device comprising a set of transmit antennas, the message m comprising a number B of bits, said transmitter device comprising:

   - A binary code generator (100) configured to generate a binary code from the *B* bits of the message;
   - A binary interleaver (102) configured to apply interleaving to said binary code, which provides an interleaved binary code $g_i$;
   - A sequence selector (103) configured to determine a sequence $\mathbf{r}_l(m_l)$ of low peak-to-average power ratio vectors from the bits of the interleaved binary code $g_i$, the sequence selector (103) being configured to determine the sequence $\mathbf{r}_l(m_l)$ of low peak-to-average power ratio vectors that limits the number of non-zero elements in the low peak-to-average power ratio vectors, the sequence being associated with a sequence index I, wherein the transmitter device (1) comprises a single-carrier or multi-carrier modulator (14) for each transmit antenna configured to apply single-carrier or multi-carrier modulation to the sequence determined by the sequence selector and transmit the modulated combined sequence over the communication channel using said transmit antennas, an OFDM modulator providing OFDM modulation symbols grouped into resource blocks, wherein the *E/L* -bit representation of *E/L* adjacent bits from the interleaved binary code in an OFDM modulation symbol *l* is $m_l \in \{0,1, \ldots , 2^{(E/L)} -1\}$, *L* representing the number of OFDM modulation symbols, with I=0, 1, ..., L-1, and *E* representing the number of bits delivered by the binary code generator (100).

2. The transmitter device of claim 1, wherein the binary code is a 3GPP polar code.

3. The transmitter device of claim 2, wherein the binary code generator (100) is configured to generate an initial binary code comprising $N_c$ bits and comprises a converter for converting the $N_c$ generated binary coded bits of the initial binary code into *E* bits which are input to said interleaver (102).

4. The transmitter device of any preceding claim, wherein the number of bits delivered by the binary code generator and the interleaver is equal to $E = L \lfloor \log_2 \ \alpha K \rfloor$ where K represents the minimal number of physical resource blocks and $\alpha$ represents the number of resource elements comprised in each resource block.

5. The transmitter device of any preceding claim, wherein the interleaver is configured to ensure that more than one bit of the binary code provided by the binary code generator, in a group of $\lfloor \log_2 \alpha K \rfloor$ adjacent coded bits, do not jointly contribute to a particular low-PAPR sequence.

6. The transmitter device of claim 5, wherein the interleaver is configured to implement a mapping of the coded bits provided by the binary code generator to a low-PAPR sequence defined by a function *f*() such as each component $g_i$ of index i of the interleaved binary code is equal to:

$$ g_i = f_{\left( i \bmod \left( \frac{E}{L} \right) \right) L + \lfloor iL/E \rfloor} $$

7. The transmitter device of any preceding claim, wherein each resource block comprises resource elements, and wherein the sequence $\mathbf{r}_l(m_l)$ of low peak-to-average power ratio vectors comprises *L* vectors of dimension $\alpha K$, where *K* represents the minimal number of physical resource blocks and $\alpha$ represents the number of resource elements comprised in each resource block.

8. The transmitter device of any preceding claim, wherein the sequence selector (104) is configured to determine said sequence $\mathbf{r}_l(m_l)$ of low peak-to-average power ratio vectors such that the peak-to-average power ratio of the resulting time waveform after modulation is minimized.

9. The transmitter device of any preceding claim, wherein the elements of said low peak-to-average power ratio vectors have only one non-zero element set to 1.

10. A method of transmitting a digital input message corresponding to control data used in a control channel, PUCCH or PRACH, through a communication channel, the message m comprising a number $B$ of bits, said method comprising:

- generating a binary code $f_i$ from the message;
- applying interleaving to said binary code, which provides an interleaved binary code $g_i$;
- determining a sequence $r_I(m_I)$ of low peak-to-average power ratio vectors from the bits of the interleaved binary code $g_i$,
wherein sequence $\mathbf{r}_I(m_I)$ of low peak-to-average power ratio vectors that limits the number of non-zero elements in the low peak-to-average power ratio vectors is determined, the sequence being associated with a sequence index I, the method further comprising applying a single-carrier or multi-carrier modulation to the combined sequence and transmitting the modulated combined sequence over the communication channel using transmit antennas, the OFDM modulation providing OFDM modulation symbols grouped into resource blocks, wherein the $E/L$ -bit representation of $E/L$ adjacent bits from the interleaved binary code in an OFDM modulation symbol $I$ is $m_I \in \{0,1, ... , 2^{(E/L)} - 1\}$, $L$ representing the number of OFMD modulation symbols, with I=0, 1, ..., L-1, and $E$ representing the number of bits delivered at the binary code generation step.

**Patentansprüche**

1. Sendervorrichtung (1) zum Übertragen einer digitalen Eingangsnachricht über einen Kommunikationskanal, die Steuerungsdaten entspricht, die in einem Steuerungskanal, PUCCH oder PRACH, verwendet werden, wobei die Sendervorrichtung einen Satz von Sendeantennen umfasst, wobei die Nachricht m eine Anzahl $B$ von Bits umfasst, wobei die Sendervorrichtung Folgendes umfasst:

- einen Binärcodegenerator (100), der dafür konfiguriert ist, einen Binärcode $f_i$ aus den $B$ Bits der Nachricht zu erzeugen,
- einen binären Interleaver (102), der dafür konfiguriert ist, ein Interleaving auf den Binärcode anzuwenden, das einen Interleave-Binärcode $g_i$ bereitstellt;
- einen Folgeselektor (103), der dafür konfiguriert ist, eine Folge $\mathbf{r}_I(m_I)$ von Vektoren mit niedrigem Spitzenwert-zu-Mittelwert-Leistungsverhältnis aus den Bits des Interleave-Binärcodes $g_i$ zu bestimmen, wobei der Folgeselektor (103) dafür konfiguriert ist, die Folge $\mathbf{r}_I(m_I)$ von Vektoren mit niedrigem Spitzenwert-zu-Mittelwert-Leistungsverhältnis zu bestimmen, welche die Anzahl von von null verschiedenen Elementen in den Vektoren mit niedrigem Spitzenwert-zu-Mittelwert-Leistungsverhältnis begrenzt, wobei der Folge ein Folgeindex $I$ zugeordnet ist,
wobei die Sendervorrichtung (1) einen Einzelträger- oder Mehrträgermodulator (14) für jede Sendeantenne umfasst, der dafür konfiguriert ist, Einzelträger- oder Mehrträgermodulation auf die durch den Folgeselektor bestimmte Folge anzuwenden und die modulierte kombinierte Folge unter Verwendung der Sendeantennen über den Kommunikationskanal zu übertragen, wobei ein OFDM-Modulator OFDM-Modulationssymbole bereitstellt, die zu Ressourcenblöcken gruppiert sind,
wobei die $E/L$-Bit-Darstellung von $E/L$ benachbarten Bits aus dem Interleave-Binärcode in einem OFDM-Modulationssymbol $I$ $m_I \in \{0, 1, ..., 2^{(E/L)}-1\}$ ist, wobei $L$ die Anzahl von OFDM-Modulationssymbolen darstellt, mit 1 = 0, 1, ...,L-1, und $E$ die Anzahl von Bits darstellt, die durch den Binärcodegenerator (100) geliefert werden.

2. Sendervorrichtung nach Anspruch 1, wobei der Binärcode ein 3GPP-Polarcode ist.

3. Sendervorrichtung nach Anspruch 2, wobei der Binärcodegenerator (100) dafür konfiguriert ist, einen anfänglichen Binärcode zu erzeugen, der $N_c$ Bits umfasst, und einen Konverter zum Konvertieren der $N_c$ erzeugten binär codierten Bits des anfänglichen Binärcodes in $E$ Bits, die in den Interleaver (102) eingegeben werden, umfasst.

4. Sendervorrichtung nach einem der vorhergehenden Ansprüche, wobei die Anzahl von durch den Binärcodegenerator und den Interleaver gelieferten Bits gleich $E = L\lfloor log_2 \alpha K \rfloor$ ist, worin K die minimale Anzahl von physikalischen Ressourcenblöcken darstellt und $\alpha$ die Anzahl von in jedem Ressourcenblock enthaltenen Ressourcenelementen darstellt.

**5.** Sendervorrichtung nach einem der vorhergehenden Ansprüche, wobei der Interleaver dafür konfiguriert ist, sicherzustellen, dass in einer Gruppe von $\lfloor log_2 \, \alpha K \rfloor$ benachbarten codierten Bits mehr als ein Bit des durch den Binärcodegenerator bereitgestellten Binärcodes nicht gemeinsam zu einer bestimmten Folge mit niedrigem Spitzenwert-zu-Mittelwert-Leistungsverhältnis beiträgt.

**6.** Sendervorrichtung nach einem der vorhergehenden Ansprüche, wobei der Interleaver dafür konfiguriert ist, eine Abbildung der durch den Binärcodegenerator bereitgestellten codierten Bits auf eine Folge mit niedrigem Spitzenwert-zu-Mittelwert-Leistungsverhältnis zu implementieren, die durch eine Funktion $f()$ definiert ist, sodass jede Komponente $g_i$ des Index $i$ des Interleave-Binärcodes gleich Folgendem ist:

$$g_i = f_{\left( i \bmod \left( \frac{E}{L} \right) \right) L + \lfloor iL/E \rfloor}$$

**7.** Sendervorrichtung nach einem der vorhergehenden Ansprüche, wobei jeder Ressourcenblock Ressourcenelemente umfasst, und wobei die Folge $\mathbf{r}_l(m_l)$ von Vektoren mit niedrigem Spitzenwert-zu-Mittelwert-Leistungsverhältnis $L$ Vektoren der Dimension $\alpha K$ umfasst, worin $K$ die minimale Anzahl von physikalischen Ressourcenblöcken darstellt und $\alpha$ die Anzahl von in jedem Ressourcenblock enthaltenen Ressourcenelementen darstellt.

**8.** Sendervorrichtung nach einem der vorhergehenden Ansprüche, wobei der Folgeselektor (104) dafür konfiguriert ist, die Folge $\mathbf{r}_l(m_l)$ von Vektoren mit niedrigem Spitzenwert-zu-Mittelwert-Leistungsverhältnis so zu bestimmen, dass das Spitzenwert-zu-Mittelwert-Leistungsverhältnis der resultierenden Zeitwellenform nach einer Modulation minimiert ist.

**9.** Sendervorrichtung nach einem der vorhergehenden Ansprüche, wobei die Elemente der Vektoren mit niedrigem Spitzenwert-zu-Mittelwert-Leistungsverhältnis nur ein von null verschiedenes Element aufweisen, das auf 1 gesetzt ist.

**10.** Verfahren zum Übertragen einer digitalen Eingangsnachricht über einen Kommunikationskanal, die Steuerungsdaten entspricht, die in einem Steuerungskanal, PUCCH oder PRACH, verwendet werden, wobei die Nachricht m eine Anzahl B von Bits umfasst, wobei das Verfahren Folgendes umfasst:

- Erzeugen eines Binärcodes $f_i$ aus der Nachricht;
- Anwenden von Interleaving auf den Binärcode, was einen Interleave-Binärcode $g_i$ bereitstellt;
- Bestimmen einer Folge $\mathbf{r}_l(m_l)$ von Vektoren mit niedrigem Spitzenwert-zu-Mittelwert-Leistungsverhältnis aus den Bits des Interleave-Binärcodes $g_i$, wobei die Folge $\mathbf{r}_l(m_l)$ von Vektoren mit niedrigem Spitzenwert-zu-Mittelwert-Leistungsverhältnis, welche die Anzahl von von null verschiedenen Elementen in den Vektoren mit niedrigem Spitzenwert-zu-Mittelwert-Leistungsverhältnis begrenzt, bestimmt ist, wobei der Folge ein Folgeindex 1 zugeordnet ist,
wobei das Verfahren ferner das Anwenden einer Einzelträger- oder Mehrträgermodulation auf die kombinierte Folge und das Übertragen der modulierten kombinierten Folge über den Kommunikationskanal unter Verwendung von Sendeantennen umfasst, wobei die OFDM-Modulation OFDM-Modulationssymbole bereitstellt, die zu Ressourcenblöcken gruppiert sind,
wobei die $E/L$-Bit-Darstellung von $E/L$ benachbarten Bits aus dem Interleave-Binärcode in einem OFDM-Modulationssymbol $l$ $m_l \in \{0, 1, ..., 2^{(E/L)}-1\}$ ist, wobei $L$ die Anzahl von OFDM-Modulationssymbolen darstellt, mit 1 = 0, 1, ..., L-1, und $E$ die Anzahl von Bits darstellt, die im Binärcode-Erzeugungsschritt geliefert werden.

**Revendications**

**1.** Dispositif émetteur (1) destiné à émettre un message d'entrée numérique correspondant à des données de commande utilisées dans un canal de commande, PUCCH ou PRACH, par le biais d'un canal de communication, le dispositif émetteur comprenant un ensemble d'antennes d'émission, le message m comprenant un nombre $B$ de bits, ledit dispositif émetteur comprenant :

- un générateur de code binaire (100) configuré pour générer un code binaire $f_i$ à partir des $B$ bits du message ;
- un entrelaceur binaire (102) configuré pour appliquer un entrelacement audit code binaire, fournissant un code

binaire entrelacé $g_i$ ;
- un sélecteur de séquence (103) configuré pour déterminer une séquence $\mathbf{r}_l(m_l)$ de vecteurs de faible rapport puissance de crête/puissance moyenne à partir des bits du code binaire entrelacé $g_i$, le sélecteur de séquence (103) étant configuré pour déterminer la séquence $\mathbf{r}_l(m_l)$ de vecteurs de faible rapport puissance de crête/puissance moyenne qui limite le nombre d'éléments non nuls dans les vecteurs de faible rapport puissance de crête/puissance moyenne, la séquence étant associée à un indice de séquence $l$,
dans lequel ledit dispositif émetteur (1) comprend un modulateur monoporteuse ou multiporteuse (14) pour chaque antenne d'émission, configuré pour appliquer une modulation monoporteuse ou multiporteuse à la séquence déterminée par le sélecteur de séquence et pour émettre la séquence combinée modulée sur le canal de communication en utilisant lesdites antennes d'émission, un modulateur MROF fournissant des symboles de modulation MROF regroupés en blocs de ressources,
dans lequel ladite représentation de $E/L$ bits de $E/L$ bits adjacents du code binaire entrelacé dans un symbole de modulation MROF $l$ est $m_l \in \{0, 1, ..., 2^{(E/L)}-1\}$, $L$ représentant le nombre de symboles de modulation MROF, avec 1 = 0, 1, ..., L-1, et $E$ représentant le nombre de bits délivrés par le générateur de code binaire (100).

2.  Dispositif émetteur selon la revendication 1, dans lequel le code binaire est un code polaire 3GPP.

3.  Dispositif émetteur selon la revendication 2, dans lequel le générateur de code binaire (100) est configuré pour générer un code binaire initial comprenant $N_c$ bits et comprend un convertisseur destiné à convertir les $N_c$ bits codés binaires générés du code binaire initial en $E$ bits qui sont fournis en entrée audit entrelaceur (102).

4.  Dispositif émetteur selon l'une quelconque des revendications précédentes, dans lequel le nombre de bits délivrés par le générateur de code binaire et l'entrelaceur est égal à $E = L\lfloor log_2 \alpha K \rfloor$, où K représente le nombre minimal de blocs de ressources physiques et $\alpha$ représente le nombre d'éléments de ressources compris dans chaque bloc de ressources.

5.  Dispositif émetteur selon l'une quelconque des revendications précédentes, dans lequel l'entrelaceur est configuré pour garantir que plus d'un bit du code binaire fourni par le générateur de code binaire, dans un groupe de $\lfloor log_2 \alpha K \rfloor$, bits codés adjacents ne contribuent pas conjointement à une séquence particulière à faible rapport puissance de crête/puissance moyenne.

6.  Dispositif émetteur selon l'une quelconque des revendications précédentes, dans lequel l'entrelaceur est configuré pour mettre en oeuvre une mise en correspondance des bits codés fournis par le générateur de code binaire et d'une séquence à faible rapport puissance de crête/puissance moyenne définie par une fonction $f()$ telle que chaque composante $g_i$ d'indice i du code binaire entrelacé est égale à :

$$g_i = f_{\left(i\mathrm{mod}\left(\frac{E}{L}\right)\right)L+\lfloor iL/E\rfloor}$$

7.  Dispositif émetteur selon l'une quelconque des revendications précédentes, dans lequel chaque bloc de ressources comprend des éléments de ressources, et dans lequel la séquence $\mathbf{r}_l(m_l)$ de vecteurs de faible rapport puissance de crête/puissance moyenne comprend $L$ vecteurs de dimension $\alpha K$, où $K$ représente le nombre minimal de blocs de ressources physiques et $\alpha$ représente le nombre d'éléments de ressources compris dans chaque bloc de ressources.

8.  Dispositif émetteur selon l'une quelconque des revendications précédentes, dans lequel le sélecteur de séquence (104) est configuré pour déterminer ladite séquence $\mathbf{r}_l(m_l)$ de vecteurs de faible rapport puissance de crête/puissance moyenne de telle manière que le rapport puissance de crête/puissance moyenne de la forme d'onde temporelle résultante après modulation est minimisée.

9.  Dispositif émetteur selon l'une quelconque des revendications précédentes, dans lequel les éléments desdits vecteurs de faible rapport puissance de crête/puissance moyenne ont un seul élément non nul réglé à 1.

10. Procédé d'émission d'un message d'entrée numérique correspondant à des données de commande utilisées dans un canal de commande, PUCCH ou PRACH, par le biais d'un canal de communication, le message m comprenant un nombre *B* de bits, ledit procédé comprenant :

- la génération d'un code binaire $f_i$ à partir du message ;
- l'application d'un entrelacement audit code binaire, fournissant un code binaire entrelacé $g_i$ ;
- la détermination d'une séquence $\mathbf{r}_l(m_l)$ de vecteurs de faible rapport puissance de crête/puissance moyenne à partir des bits du code binaire entrelacé $g_i$, dans lequel la séquence $\mathbf{r}_l(m_l)$ de vecteurs de faible rapport puissance de crête/puissance moyenne qui limite le nombre d'éléments non nuls dans les vecteurs de rapport puissance de crête/puissance moyenne faible est déterminée, la séquence étant associée à un indice de séquence 1,

le procédé comprenant en outre l'application d'une modulation monoporteuse ou multiporteuse à la séquence combinée et l'émission de la séquence combinée modulée sur le canal de communication à l'aide d'antennes d'émission, la modulation MROF fournissant des symboles de modulation MROF regroupés en blocs de ressources,

dans lequel la représentation de *E*/*L* bits de *E*/*L* bits adjacents du code binaire entrelacé dans un symbole de modulation MROF *l est* $m_l \in \{0, 1, ..., 2^{(E/L)}\text{-}1\}$, *L* représentant le nombre de symboles de modulation MROF, avec 1 = 0, 1, ..., L-1, et *E* représentant le nombre de bits délivrés à l'étape de génération de code binaire.

10

**FIGURE 1**

**FIGURE 2**

| Generating a binary code | 300 |
| --- |

↓

| Applying binary interleaving to the binary code | 302 |
| --- |

↓

| Determining a sequence ($\mathbf{r}_l(m_l)$) of low peak-to-average power ratio vectors | 304 |
| --- |

↓

| Applying single-carrier or multi-carrier modulation and transmitting the modulated sequence | 306 |
| --- |

**FIGURE 3**

**EP 3 985 894 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2547041 A
- WO 2008156338 A
- US 8315185 B2

**Non-patent literature cited in the description**

- **GABI SARKIS ; PASCAL GIARD ; ALEXANDER VARDY ; CLAUDE THIBEAULT ; WARREN J. GROSS.** Fast List Decoders for Polar Codes. *IEEE Jounal on Selected Areas in Communications,* February 2016, vol. 34 (2